Europäisches Patentamt

European Patent Office

Office européen des brevets

(19)

(11) Publication number: **0 244 921 B1**

## (12) EUROPEAN PATENT SPECIFICATION

(45) Date of publication of patent specification: 02.05.91

(21) Application number: 87201149.9

(22) Date of filing: 06.08.82

(51) Int. Cl.⁵: **C22B 11/02**

(60) Publication number of the earlier application in accordance with Art.76 EPC: **0 077 121**

(54) **Method for recovering platinum in a nitric acid plant.**

(30) Priority: 12.08.81 US 292113
12.08.81 US 292114
16.12.81 US 331333

(43) Date of publication of application:
**11.11.87 Bulletin 87/46**

(45) Publication of the grant of the patent:
**02.05.91 Bulletin 91/18**

(84) Designated Contracting States:
**AT BE CH DE FR GB IT LI LU NL SE**

(56) References cited:
**DE-A- 1 810 554**
**DE-B- 1 483 138**
**GB-A- 1 082 105**

**PLATINUM METALS REVIEW, vol. 13, no. 1, January 1969, pages 2-8, London, GB; H. HOLZMANN "Platinum recovery in ammonia oxidation plants"**

(73) Proprietor: **ENGELHARD CORPORATION**
**Menlo Park, CN 40**
**Edison New Jersey 08818(US)**

(72) Inventor: **Hatfield, W. Robert**
**307 Park Street**
**Westfield New Jersey(US)**
Inventor: **Beshty, Bahjat S.**
**15 Maple Street**
**Princeton New Jersey(US)**
Inventor: **Lee, Hyo C.**
**25 Timber Road**
**Edison New Jersey(US)**
Inventor: **Heck, Ronald M.**
**R.D. 2**
**Frenchtown New Jersey(US)**
Inventor: **Hsiung, Thomas M.**
**20 Woodlake Drive**
**Piscataway New Jersey(US)**

(74) Representative: **Fisher, Adrian John et al**
**CARPMAELS & RANSFORD 43 Bloomsbury Square**
**London WC1A 2RA(GB)**

CHEMIE-ING.-TECHNIK, vol. 40, no. 24, 1968, pages 1229-1237, Weinheim; H. HOLZMANN "Platin-Rückgewinnung bei der NH3-Verbrennung an Platin/Rhodium-Netzkatalysatoren"

## Description

Nitric acid is produced commercially by passing ammonia and air over an oxidation catalyst which is usually a gauze woven from platinum-rhodium alloy wire. Typically, the temperature of gas leaving the gauze ranges from about 810°C to about 960°C., most often above 850°C. As ammonia is oxidized, platinum is slowly lost from the gauze, possibly in the form of the more volatile oxides. Rhodium is also lost, but this is not so severe a problem. The rate of loss depends upon the type of plant. Typically, for each ton of ammonia converted, a high pressure plant will lost more than one gram of platinum, while lower pressure plants will lose less. Even though the rate of catalyst loss is slow when expressed in terms of weight, the cost is usually quite substantial. In many operations, the cost of platinum lost during production has been said to be the second largest expense of the operation, exceeded only by the cost of ammonia feedstock.

Many approaches have been tried to recover some of the platinum and rhodium. Filters of various materials have been placed downstream of the catalyst gauze to mechanically catch and retain solid particles of platinum and rhodium. Later, it was discovered that various palladium alloys had the ability to withdraw platinum-containing vapour from the gas stream. The mechanism of this withdrawal has been a subject of some controversy, but is has been theorized that, in the course of the reaction, platinum oxide in the gas phase may revert to platinum, which either returns to the catalyst gauze or is carried away by the stream to possibly alloy with palladium and catalyze formation of volatile palladium compounds. (See Holtzmann, Chemie-Ingenieur-Technik, vol. 40, No. 24:1229-37, 1968). A variety of alloying elements have been selected, mainly for their ability to improve the mechanical properties of palladium. Typical commercial palladium alloys have contained about 80% palladium and 20% gold by weight. The recovery alloys are usually employed in the form of multiple sheets of woven gauze but knitted meshes or other foraminous elements can also be used. The recovery gauze is usually placed as close as possible to the catalyst gauze, often within a few millimetres, usually no more than 10 mm. Since the catalyst gauze in a nitric acid plant is changed regularly on a schedule of from about every 35 to every 270 days, depending on plant design, as a practical matter, the recovery gauze is usually replaced when the catalyst gauze is changed, although it is possible to replace it less frequently. This technology, which is currently widely applied, is described in more detail in U.S. Patent 3,434,820; Platinum Metals Review, Vol. 13 [No. 1]: Pages 2-8 (Jan., 1969); British Patent 1,082,105; and in Chemie- Ingenieur-Technik, Vol. 40, No. 24: 1229-37 (1968). As applied, the recovery efficiency of each sheet of recovery gauze obtained using this technology has ranged from about 10% to 60%, primarily depending upon the type of plant which is usually specified in terms of the nitrogen loading of the plant.

Our European Patent Application No. 82304173.6 (EP-A-0077121) discloses that it is possible to estimate the efficiency of platinum recovery of high palladium content gauzes based on the model that the process is mass transfer limited, that is, the rate of withdrawal of platinum from the stream of gas coming from the catalyst gauze is determined or limited by the rate at which the platinum species diffuses through the gas to the surface of the recovery gauze, the rate at which platinum at the wire surface can be trapped or retained or "alloyed" with the palladium in the gauze being much greater than the rate at which the platinum species can diffuse to the wire surface from the gas stream. On this basis, it is possible to rationally design and optimize the configuration of the gauze to obtain improved efficiency without incurring excess pressure drop.

Accordingly, Application No. 82304173.6 claims a foraminate element for the recovery of platinum and/or rhodium lost from a platinum-containing catalyst, said element being fabricated from palladium or an alloy comprising a major proportion of palladium, characterized in that the initial product of mesh size (expressed as the number of wires per centimetre, N) and wire diameter in centimetres ($d_w$) for said element is greater than 0.3 or, in the case when the alloy comprises a minor proportion of nickel, greater than 0.2.

Application No. 82304173.6 also claims a method for recovering platinum lost from a platinum-containing catalyst gauze in a nitric acid plant, wherein the catalyst gauze is replaced periodically, the period being the "catalyst gauze cycle length", wherein at least one recovery gauze sheet consisting of an alloy comprising a major proportion of palladium is placed adjacent to the catalyst gauze downstream of the catalyst gauze, characterized in that the mesh size N (expressed as the number of wires per centimetre) and wire diameter $d_w$ (in centimetres) of the recovery gauze are chosen such that the average recovery efficiency over the catalyst gauze cycle length exceeds $1 - \exp(-3.22/L_m^{\bullet 7})$, the average recovery efficiency $\eta$ being as calculated according to the formula

$$\eta \;=\; 1 \;-\; \exp\left[\, -\,\frac{2C}{Sc^{2/3}} \;\;.\;\; \frac{ad_w}{Re^m \, \xi^{\,1-m}} \,\right]$$

wherein "$\xi$" is the volumetric void fraction of the gauze, "Sc" is the Schmidt number for the diffusion of oxidized platinum in the effluent from the catalyst gauze; "Re" is the Reynolds number based on the wire diameter and average velocity of the process stream just upstream of the recovery gauze, i.e.,

$$Re \;=\; \frac{G\ d_w}{\mu},$$

where "G" is the mass velocity (kgm$^{-1}$cm$^{-1}$s$^{-1}$) of the gaseous stream fed to the catalyst and "$\mu$" is the dynamic viscosity (Pa.s) of the effluent from the catalyst gauze; "C" is the appropriate mass transfer correlation coefficient for the gauze; "a" is the specific bulk surface area (cm$^{-1}$) of the gauze; "m" is the appropriate mass transfer correlation exponent for the gauze; "$d_w$" is the geometric mean of the initial and final diameter (cm) of the wires in the gauze, and "$L_m$" is the weight in tonnes of nitrogen (in ammonia) passed over each square meter of the catalyst gauze per day.

Application No. 82304173.6 further claims a method of making a gauze for recovery of platinum lost from a platinum-containing catalyst in a nitric acid plant, comprising

1) determining the mass velocity (G), dynamic viscosity ($\mu$), and Schmidt No. (Sc) for the process stream in which the gauze is to be employed; and

(2) fabricating a woven wire mesh sheet from wire consisting of an alloy comprising a major proportion of palladium and a minor proportion of an alloying metal, characterized in that the mesh size and wire diameter of the mesh are chosen such that upon use in the plant, over the catalyst cycle length of the plant, the average recovery efficiency $\eta$ exceeds $1 - \exp(-3.22/L_m{}^{.7})$, $\eta$ being as calculated according to the formula

$$\eta \;=\; 1 \;-\; \exp\left[\, -\,\frac{2C}{Sc^{2/3}} \;\;.\;\; \frac{ad_w}{Re^m \, \xi^{\,1-m}} \,\right]$$

wherein "$\xi$" is the volumetric void fraction of the gauze; "Sc" is the Schmidt number for the diffusion of oxidized platinum in the effluent from the catalyst gauze; "Re" is the Reynolds number based on the wire diameter and average velocity of the process stream just upstream of the recovery gauze, i.e.,

$$Re \;=\; \frac{G\ d_w}{\mu},$$

where "G" is the mass velocity (kgm$^{-1}$cm$^{-1}$s$^{-1}$) of the gaseous stream fed to the catalyst and "$\mu$" is the dynamic viscosity (Pa.s) of the effluent from the catalyst gauze; "C" is the appropriate mass transfer correlation coefficient for the gauze; "a" is the specific bulk surface area (cm$^{-1}$) of the gauze; "m" is the appropriate mass transfer correlation exponent for the gauze; "$d_w$" is the geometric mean of the initial and final diameter (cm) of the wires in the gauze, and "$L_m$" is the weight in tonnes of nitrogen (in ammonia) passed over each square meter of the catalyst gauze per day.

According to the present invention, there is provided a method for recovering platinum lost from a platinum-containing catalyst gauze in a nitric acid plant, wherein the catalyst gauze is replaced periodically, the period being the catalyst gauze cycle length "Tp", wherein at least one recovery gauze consisting of palladium or an alloy comprising a major proportion of palladium is placed adjacent to the catalyst gauze downstream of the catalyst gauze, characterized in that the mesh size N (expressed as the number of wires per centimetre) and wire diameter $d_w$ (in centimetres) of the recovery gauze are chosen such that the recovery gauze cycle length "T", as calculated from the formula

$$T = \frac{W}{1.25\eta\, b_m L_m}$$

is in the range of from 0.9 Tp to 1.1 Tp, wherein "W" is the weight in grams per square meter of the recovery gauze sheet, "$b_m$" is the weight in grams of platinum lost from the catalyst gauze per tonne of nitrogen (in ammonia) converted, "$L_m$" is the weight in tonnes of nitrogen (in ammonia) passed over each square meter of the catalyst gauze per day, and "$\eta$" is the recovery efficiency of the recovery gauze sheet as calculated according to the formula

$$\eta = 1 - \exp\left[-\frac{2C}{Sc^{2/3}} \cdot \frac{a d_w}{Re^m \, \xi^{1-m}}\right]$$

wherein "$\xi$" is the volumetric void fraction of the gauze which is less than 0.76 but greater than 0; "Sc" is the Schmidt number for the diffusion of oxidized platinum in the effluent from the catalyst gauze; "Re" is the Reynolds number based on the wire diameter and average velocity of the process stream just upstream of the recovery gauze, i.e.,

$$Re = \frac{G\, d_w}{\mu},$$

where
"G" is the mass velocity ($kgm^{-1}cm^{-1}s^{-1}$) of the gaseous stream fed to the catalyst and "$\mu$" is the dynamic viscosity (Pa.s) of the effluent from the catalyst gauze; "C" is the appropriate mass transfer correlation coefficient for the gauze; "a" is the specific bulk surface area ($cm^{-1}$) of the gauze; "m" is the appropriate mass transfer correlation exponent for the gauze; and "$d_w$" is the geometric mean of the initial and final diameter (cm) of the wires in the gauze.

Preferably, the efficiency of the recovery gauze ($\eta$) exceeds $1 - \exp(-3.22/L_m^{\cdot 7})$, wherein $L_m$ is as defined above.

Brief Description of Drawings

Figure 1 is a chart showing the predicted instanteous recovery efficiency of various recovery gauzes in a nitric acid plant, having a nitrogen loading of 13.6 tonnes (15 tons) of nitrogen in ammonia per square meter of catalyst gauze per day, operating at a catalyst temperature of $900\,^\circ C$ and an ammonia concentration in the feed of 10 $^m$/o (mole percent).

Figures 2 and 3 are charts which are analogous to Figure 1, except that the corresponding nitrogen loadings are 51.7 and 90.7 tonnes (57 and 100 tons) respectively.

Figure 4 is a plot of the recovery function "$\phi$" as a function of wire diameter for a variety of mesh numbers for a linen weave gauze.

Figure 5 is a chart showing anticipated platinum loss as a function of nitrogen loading for a typical nitric acid plant.

Figure 6 is a graph showing the average recovery efficiencies obtainable with the present invention over the catalyst cycle as a function of nitrogen loading for a typical plant.

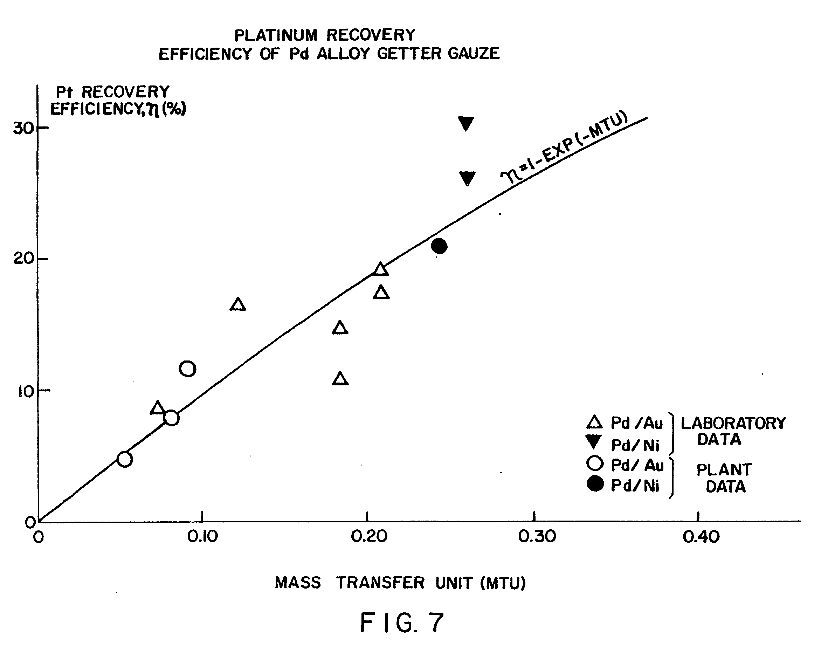

Figure 7 is a comparison of predicted recovery efficiencies with a number of experimentally determined points.

Figure 8 is an isometric view of a typical linen weave gauze.

Figure 9 is a cross-sectional view of the catalyst and recovery gauze package in a nitric acid reactor.

Figure 10 is a schematic of the nitric acid reactor.

In many cases, high efficiencies can be obtained by using a gauze configuration in which the initial product of the mesh (in wires per unit length) and wire diameter exceeds 0.2 for gauzes containing a major proportion of palladium and a minor proportion of nickel. Preferably, the initial product of the mesh and the wire diameter is not greater than 0.9. For the lower swelling alloys, such as palldium-gold, the initial product of the mesh and wire diameter should be at least 0.3 and preferably in the range of from 0.3 to 0.9, more preferably from 0.35 to 0.9. For 95% Pd:5% Ni gauzes, it is preferred that the mesh N be in the range of from 3.9 to 31.5 $cm^{-1}$ (10 to 80 $in^{-1}$), $d_w$ is in the range of from 0.0076 to 0.229 cm (0.003 to 0.090 inches), and their respective values are such that the initial product of N and $d_w$ is greater than 0.2.

In practice, for purposes of the present invention under the conditions encountered in most commercial plants, the initial instantaneous recovery efficiencies ($\eta$), that is the percentage of platinum in the stream that is recovered by a single gauze having high palladium content, may be estimated by the use of the quasi-empirical formula

$$\eta = 1 - \exp\left[-\frac{2C}{Sc^{2/3}} \cdot \frac{ad_w}{Re^m \xi^{1-m}}\right] \quad (1)$$

wherein "$\xi$" is the volumetric void fraction of the gauze, which is less than 0.76, preferably less than 0.685, but greater than 0; "Sc" is the Schmidt number for the diffusion of oxidized platinum in the effluent from the catalyst gauze, which is usually between .8 and 1.0; "Re" is the Reynolds number based on the wire diameter and average velocity of the process stream just upstream of the recovery gauze i.e.,

$$Re = \frac{G\ d_w}{\mu},$$

where "G" is the mass velocity of the gaseous stream fed to the catalyst; "$\mu$" is the dynamic viscosity of the effluent from the catalyst gauze; typically, the Reynolds number will be between 10 and 200, most often from 20 to 50; "C" is the appropriate mass transfer correlation coefficient for the geometry of the trial gauze which usually falls within the range of from about 0.4 to 1; "a" is the specific bulk surface area of the gauze in reciprocal centimeters; that is, the total surface area of one square centimeter of gauze divided by its superficial volume, "a" usually has a value within the range of from about 21 to 252 $cm^{-1}$ (53 to 640 reciprocal inches); "m" is the appropriate mass transfer correlation exponent for the configuration of the gauze usually having a value of from about 0.6-0.8; and "$d_w$" is the diameter of the wires in the gauze in centimeters. Most of the wires used in gauzes according to the present invention, will have diameters varying between 0.0038 and 0.051 cm (0.0015 and 0.02 inches).

For a square linen weave gauze, such as those most often encountered in practice, the following approximations are useful;

$$a = \pi (1 + N^2 d_w^2)^{\frac{1}{2}} N$$

where "N" is the mesh or number of wires per centimeter, and

$$\xi = 1 - \frac{1}{4}\pi N d_w (1 + N^2 d_w^2)^{\frac{1}{2}}$$

Methods of determining the appropriate mass transfer correlation coefficient "C" and mass transfer correlation exponent "m" are well-known to those skilled in the art. A notable summary of the literature pertaining to the usual configurations is found in "Estimation of Platinum Catalyst Requirement for Ammonia Oxidation" by Roberts and Gillespie in Advances in Chemistry Series, Number 133, Chemical Reaction Engineering II, 1974 pp. 600-611. For more unusual configurations, these constants may be determined experimentally. For the common stacked screen gauzes, suitable correlations may be found in Satterfield and Cortez, Ind. Eng. Chem. Fundamentals (1970) 9, 613 and Shah, ph.D. Thesis, oniversity of Birmingham, England (1970). For the purposes of this invention, equation(1) viii vork adequately with values for "C" of .94 and for "m" of .7 for the screens, reactors and flow conditions described in this application, if the values of Schmidt number and viscosity given below are used, even though the diffusing species.may not necessarily be platinum oxide.

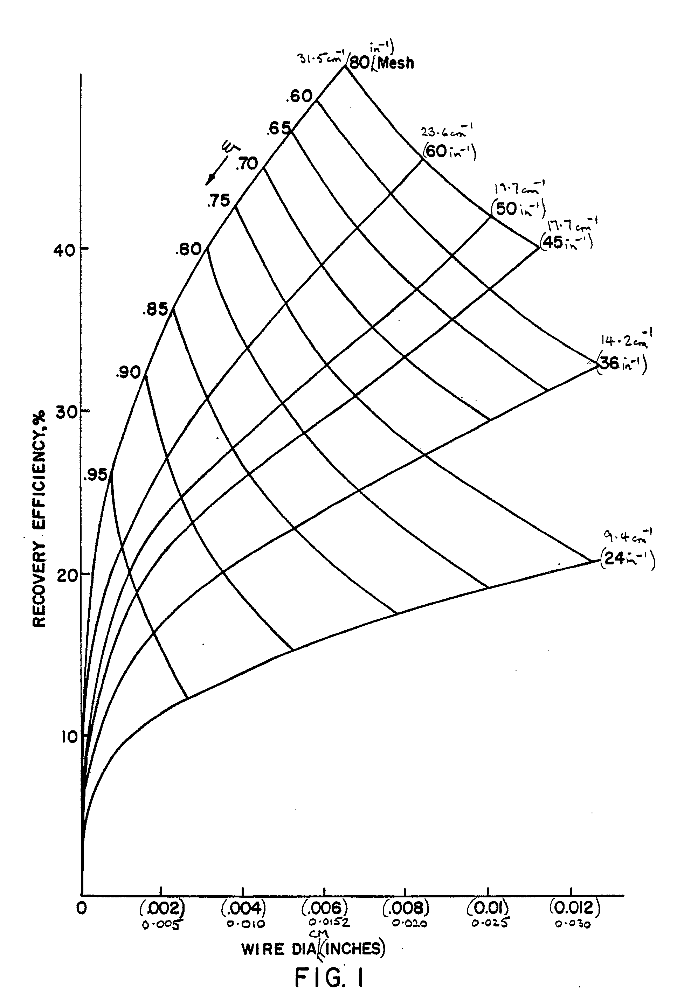

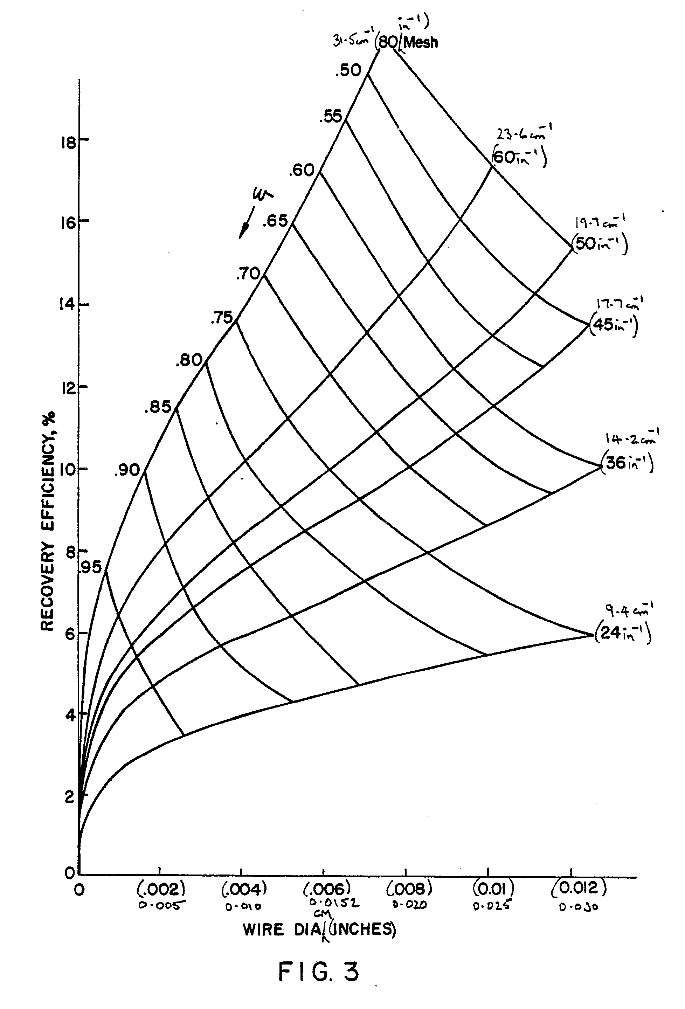

To expedite design of the recovery gauze for a particular plant, efficiency vs. wire diameter graphs similar to Figures 1, 2 and 3 can be constructed using formula (1).

As a practical matter, the properties of the gas streams vary only by small amounts over the temperature ranges encountered in practice of from about 8l0to about 960 so that properties at 900°C can be used with only slight error. Similarly, the concentration of the feed to the catalyst is normally regulated to between 10.0 to 10.5 $m_{10}$ (mole percent) ammonia and 90.0 to 89.5 mjo air, so the composition of the reaction products from the catalyst gauze remains constant, so that physical properties in that range can be used. In these ranges, the Schmidt No. is about .9 - .95 for diffusion of platinum oxide vapours in air and the dynamic viscosity of the gas is about $4.2 \times 10^{-5}$ pa.s (about $4.2 \times 10^{-4}$ poise).

Accordingly, the efficiency $\eta$ is determined primarily by the mesh "N", and wire diameter "dw", for a given nitrogen loading "Lm", where the nitrogen loading "I," is the number of tonnes of nitrogen (in ammonia) passed through each square meter of the catalyst gauze per day (or "L", where the nitrogen loading "L" is the number of short tons of nitrogen (in ammonia) passed through each square meter of the catalyst gauze per day). Thus efficiency can be plotted as a function of wire diameter for a variety of mesh sizes. Further, void fraction can be shown parametrically on the same graph, so that efficiency and the void fraction can be determined simultaneously for each given combination of wire diameter and mesh. For a given void fraction and number of gauze sheets, the pressure drop through the gauze can be estimated using known correlations. To obtain high recovery efficiency without excessive pressure drop across the gauze, it is preferred that the volumetric void fraction ($\xi$) be between 0.5. and less than 0.76. Volumetric void fractions from about 0.5 down to about 0.3 can provide even better recovery efficiencies, but care must be exercised to properly support the recovery gauze so that it is not damaged or displaced by the force of the stream of gas passing through it. In many applications, volumetric void fractions between about 0.685 and about 0.5 will provide an excellent combination of especially high recovery efficiency with acceptable pressure drop. Void fractions of about 0.3 and lower can be used to provide extremely high recovery efficiencies, but many existing plants would require modification of the gauze support to withstand and properly distribute the resulting force of the stream on the gauze. In some circumstances, the cost of power due to pressure drop may also be of some significance. However, in practice, it is normally sufficient to limit consideration to volumetric void fractions above about 0.3 and preferably in the range of from about 0.5 to less than 0.76. The most preferred range of void fractions is from about 0.5 to about 0.685.

The method of fabricating gauzes according to the present invention is easily accomplished by plotting at least a portion of the appropriate efficiency vs. wire diameter graph for the conditions, such as temperature, pressure and nitrogen loading of the plant under consideration. Then the catalyst cycle length line can be plotted on this graph using the following procedure, such that if a mesh and wire diameter combination near the catalyst cycle length line is chosen, the average recovery efficiency of the gauze over the catal yst cycle ($\bar{\eta}$) will be within the range of this invention.

The catalyst cycle length line is plotted by determining which gauzes will yield acceptable efficiencies ($\eta$) by drawing a horizontal line corresponding to the minimum acceptable efficiency across the appropriate efficiency vs. wire diameter graph, such as Figures 1-3. Then the appropriate recovery gauze cycle lengths "T" for a variety of mesh sizes and wire diameters above this horizontal line are determined using the formula

$$T = \frac{W}{1.25\,\eta\,bL} \quad or \quad T = \frac{W}{1.25\,\eta\,b_m\,L_m}$$

wherein "W" is the weight of each square meter of the recovery gauze sheet and "$b_m$" is the amount of platinum lost per tonne of ammonia processed (or "b" is the amount of platinum lost per ton of ammonia processed). In accordance with the model of the present invention, the rate of platinum recovery is approximately constant at least until the recovery gauze cycle length has been reached, but decreases rapidly thereafter. "W" in general is

$$\frac{\pi}{2}\, \rho_w\, \phi \cdot$$

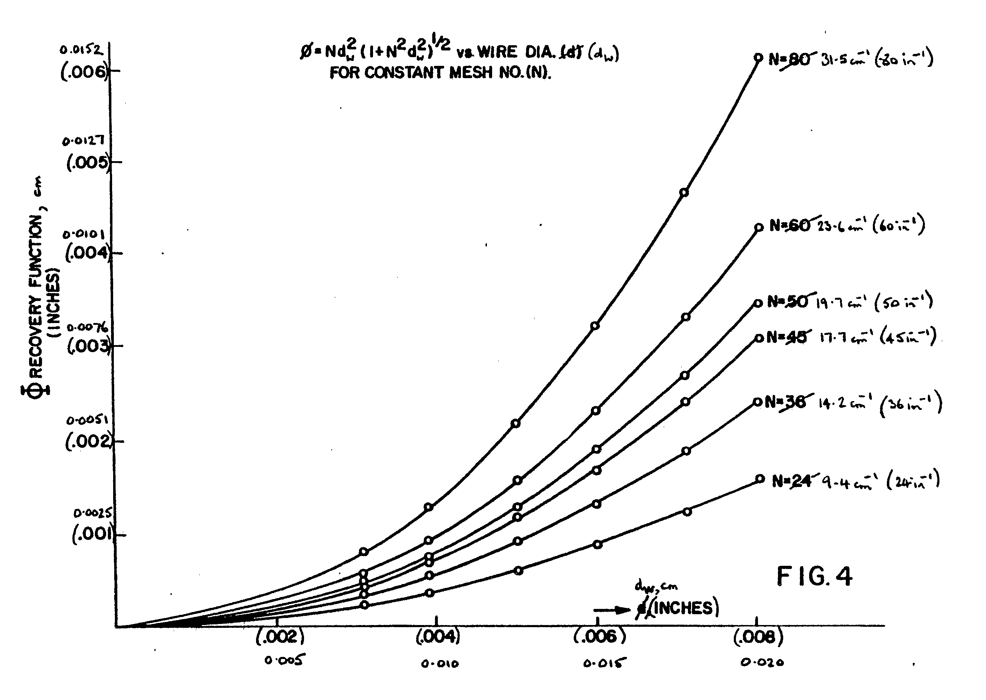

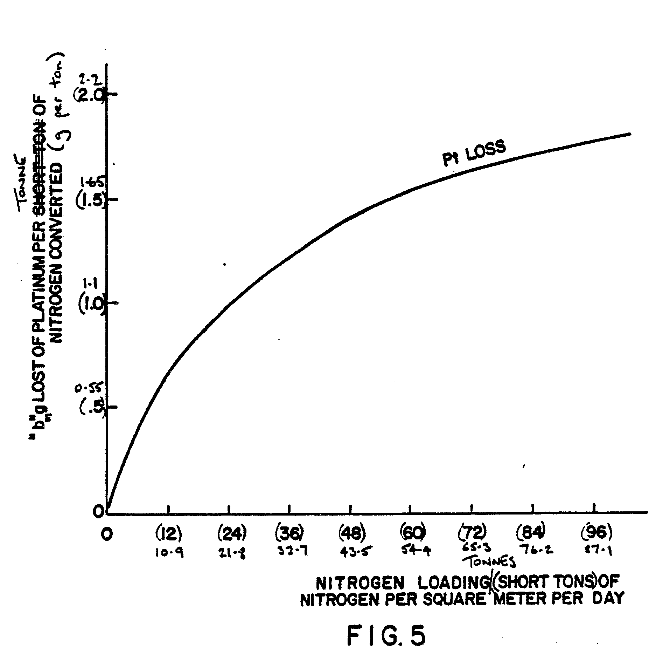

$\rho_w$ is the density of recovery gauze, "$\phi$" for a single linen weave can be determined from Figure 4. For gauzes of a weave other than linen weave, the weight may be calculated in a similar fashion from first principles or if necessary may be determined empirically. If no better data is available from the plant history or the history of a similar plant, "$b_m$" may be estimated from Figure 5, presenting loss of platinum per tonne of nitrogen processed as a function of nitrogen loading on the catalyst gauze. Finally, the catalyst cycle length line is drawn connecting the points where the recovery gauze cycle length "T" coincides with the planned catalyst cycle length of the plant, "Tp". Then a gauze giving an acceptable efficiency and pressure drop is chosen near this line. Preferably, to minimize interest costs, the minimum weight gauze which will both yield an efficiency within the range of this invention and match the planned catalyst cycle length of the plant should be chosen. It is preferred that the gauze sheets used have a weight of less than 686 g/m² (2.05 Troy ounces per square foot) or more preferably less than 636 g/m² (1.9 Troy ounces per square foot).

Provided that the recovery gauze cycle length of preceding gauzes has not been exceeded, the recovery gauze cycle length of the n th gauze is determined by using the formula

$$Tn = \frac{Wn}{1.25\eta_n\, b L_m [\, \prod\limits_{i=1}^{n-1} (1-\eta_i)\,]}$$

where "$\eta_i$" is the recovery efficiency of the ith recovery gauze sheet and Wn is the weight of the nth gauze. As a practical matter, gauzes can be added until costs of lost palladium, interest for the cost of the gauze, fabrication and installation over the operating and recovery cycle are not justified by the weight of the platinum recovered. Normally, from about .3 to about .5 grams of palladium will be lost from the recovery gauze from each gram of platinum recovered. In many cases, it will be advantageous to use gauzes of relatively coarse mesh and large diameter wires in the initial layers of the recovery gauze, and to use finer mesh, thinner wires, or both, in the succeeding gauzes, even though the efficiency of the initial gauzes may not be as high as could be obtained. By appropriately choosing the mesh and wire diameter for each gauze, it is possible to obtain recovery gauze cycle lengths which are close to the planned catalyst cycle length for each gauze in the pack. This result can be obtained since the efficiency of the downstream gauzes can be made greater than the efficiency of the upstream gauzes.

If it is desired to design recovery packs so that there are approximately equal recovery gauze cycle lengths obtained for each sheet in the pack, the first sheet of the pack should be designed as described previously, so that it will have an average recovery efficiency over the catalyst cycle within an acceptable range, and preferably greater than $1 - \exp(-3.22/L_m{}^{.7})$, i e. greater than $1 - \exp(-3.45/L{}^{.7})$. The recovery gauze cycle length for this first gauze sheet will be in the range of from nine-tenths to eleven-tenths of the planned catalyst gauze cycle length for the plant. The geometric configuration of each succeeding gauze sheet may then be chosen, so that the following relationship is approximately satisfied for each gauze sheet:

$$a_n \left(\frac{d_n}{\eta_{(n}}\right)^{1-m} = \frac{Sc}{2C}^{2/3} \left(\frac{G}{\mu}\right)^m \ln\left\{\frac{1 + \dfrac{\bar{\eta}_i}{\phi_1}\left[\phi_n - \displaystyle\sum_{i=1}^{n}\phi_i\right]}{1 - \dfrac{\eta_1}{\phi_1}\displaystyle\sum_{i=1}^{n}\phi_i}\right\}$$

where $a_n$, $d_n$ and $\xi_n$ are the specific bulk surface area, wire diameter and void fraction, respectively, for the $n^{th}$ sheet in the gauze; $\bar{\eta}_1$ is the average recovery efficiency of the first gauze; $\eta_i$ and $\phi_i$ are the respective recovery efficiencies and recovery functions for the $i^{th}$ gauze sheet; Sc, G, C, m and $\mu$ are as defined previously, while n is the number of the gauze sheet being designed in the pack. For instance, for the second gauze sheet in the pack, the relationship should be approximately satisfied with n = 2, the third with n = 3, and so on. Greatly improved results can be obtained by insuring that at least one gauze (preferably at least two) in the pack has an average recovery efficiency exceeding 1 - exp(-3.22/$L_m$.$^7$), i.e. 1 - exp(-3.45/L.$^7$) and that at least one, but preferably at least two, gauze sheets have a recovery gauze cycle length of from nine-tenths to eleven-tenths of the planned catalyst gauze cycle length.

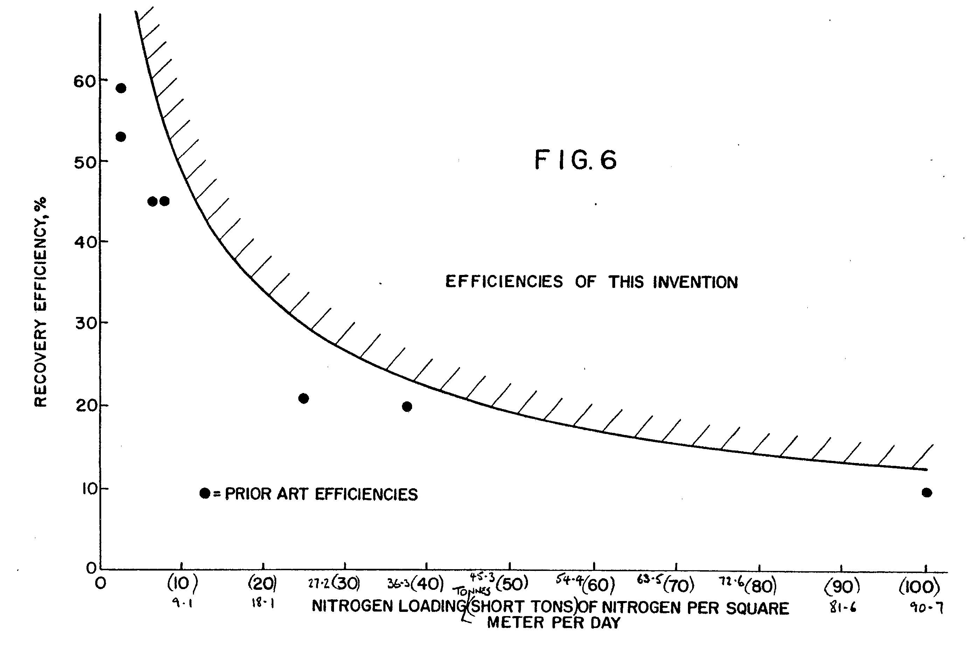

Using the method of the present invention for a given plant, it is possible to obtain average single sheet recovery efficiencies over the catalyst cycle ($\bar{\eta}$) which are greater than the values given in column 2 of Table I. Using preferred configurations, it is possible to obtain average efficiencies greater than those given in column 3. Figure 6 is a graph illustrating the average recovery efficiencies obtainable over the catalyst cycle length with the gauzes of the present invention as a function of nitrogen loading, as compared to efficiencies reported in the prior art.

In practice, recovery gauzes almost always contain a major proportion of palladium or gold and minor additions of other alloying elements which improve mechanical properties. By major proportion of palladium, it is meant that the recovery gauze contains at least about 70% palladium by weight. Preferably, the recovery gauzes will contain at least about 80% palladium and more preferably 90%. The most preferred recovery gauzes contain at least about 95% palladium by weight. Perhaps the most widely used alloy has been an alloy containing 80% palladium and 20% gold. While this alloy has found wide use, alternatives have been sought, since inclusion of gold greatly increases the cost of the gauze. Other alloying elements for palladium include other platinum group metals, nickel, manganese, chromium, carbon, boron, and the like. Particularly useful palladium alloys include palladium/gold, palladium/platinum, palladium/nickel, palladium/copper, palladium/ruthenium, and palladium/silver.

## TABLE I

| Plant Loading tonnes (Tons) of Nitrogen As Ammonia Per $m^2$ Per Day | Efficiency of Gauges of the Present Invention | Efficiency of Preferred Gauzes |
|---|---|---|
| 9.1-13.6 (10-15) | 49 | 52 |
| 13.6-18.1 (15-20) | 41 | 44 |
| 18.1-22.7 (20-25) | 35 | 37 |
| 22.7-27.2 (25-30) | 31 | 33 |
| 27.2-31.8 (30-35) | 28 | 30 |
| 31.8-36.3 (35-40) | 25 | 27 |
| 36.3-40.8 (40-45) | 23 | 24 |
| 40.8-49.9 (45-55) | 21 | 22 |
| 49.9-59.0 (55-65) | 19 | 20 |
| 59.0-68.0 (65-75) | 17 | 18 |
| 68.0-77.1 (75-85) | 16 | 16 |
| 77.1-90.7 (85-100) | 15 | 15 |
| 90.7+ (100+) | 13 | 14 |

For the purposes of the present invention, the preferred alloys are palladium/gold and palladium/nickel alloys, particularly alloys containing at least about 80% palladium. 95% palladium and 5% nickel is a particularly advantageous alloy for the practice of the present invention, s ince it is relatively inexpensive, is easily fabricated and upon exposure to the hot platinum-containing effluent, the wires swell and may double in diameter before they are to be removed. In some cases, the diameter of the wires in the gauze may more than double, reaching approximately 2.5 times their initial diameter. When properly allowed for, this swelling can be particularly advantageous, as the efficiency of the gauze increases as the wires swell. For example, in a plant having a nitrogen loading of 51.7 tonnes (57 tons) per square meter per day, a 14.2 $cm^{-1}$ (36 $in^{-1}$) mesh by 0.0173 cm (.0068 in) wire diameter gauze with an initial efficiency of about 11% could provide an efficiency of about 14% after the wires swell to 0.0305 cm (.012 in) and over about 18% if the wires reach 2.5 times their initial diameter. Thus, a gauze which provided an instantaneous efficiency which was initially outside the desired range, can swell to provide an average efficiency in the desired range, providing a much higher efficiency than would have been predicted based on its initial configuration.

Thus, when nickel/palladium gauzes are used, a gauze may be selected such that its recovery efficiency based on its initial configuration is less than $1 - \exp(-3.22/L_m{}^{\bullet 7})$, i.e. $1 - \exp(-3.45/L^{\bullet 7})$, but upon swelling, these gauzes provide an average recovery efficiency over the catalyst cycle greater than $1 - \exp(-3.22/L_m{}^{\bullet 7})$, i.e. greater than $1 - \exp(3.45/L^{\bullet 7})$.

In the case of 95% Pd:5% Ni, the average recovery efficiencies over the catalyst cycle $(\bar{\eta})$ correlate best when recovery is predicted based upon the geometric mean of the initial and swelled diameters, but adequate correlation for the 80% Pd:20% Au gauzes can be obtained if recovery is predicted based upon initial diameter, since the effect of swelling seems to be somewhat less pronounced. If it is desired to account for the effect of swelling in a palladium-gold alloy gauze, the geometric mean wire diameter may be estimated by multiplying the initial diameter by 1.1. Often for 95% Pd:5% Ni, the geometric mean diameter can be estimated satisfactorily by multiplying the initial diameter by a factor in the range of from about 1.4 to 1.6, depending on the location of the gauze in the recovery pack with the higher end of the range being used for the first or second layers in the pack and the lower end for the fifth and sixth layers. Thus, Equation 1 can also be used to estimate average efficiencies if geometric mean wire diameters are used and the recovery gauze cycle length is not exceeded.

Specific Embodiments

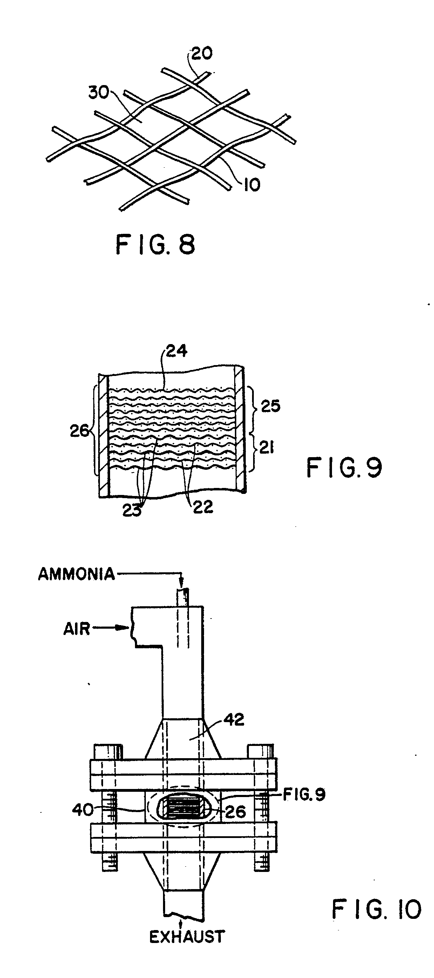

As illustrated in Figure 8, the recovery gauzes used in the method of the present invention may be employed in the form of screens 10 having wires 20 and openings 30. As explained, the combination of the diameter of wires 20 in centimeters and the mesh or number of wires per lineal centimeter determining the mass transfer parameters (MTP) of the screen according to the formula

$$MTP \quad = \quad \frac{a \; d_w}{Re^m \; \xi^{1-m}}$$

Then, the number of mass transfer units (MTU) represented by a single gauze may be determined from the relationship

$$MTU \quad = \quad \frac{2C}{Sc^{2/3}} \quad MTP.$$

As shown in Figure 9, prior to a typical run, a gauze ensemble 20 is placed into reaction chamber 40 (Figure 10) of a combustion vessel 42. This ensemble 20 includes recovery gauze pack 21 and catalyst pack 25 placed adjacent to one another. Catalyst pack 25 contains individual sheets 24 of catalyst in the form of nettings. or screens stacked one atop the other. In Figure 9, the catalyst pack is depicted with seven sheets of catalyst, but it is to be understood that the precise number of sheets is not critical and they may be increased or decreased as needed to effect an essentially complete conversion of ammonia to nitrogen oxides. One such catalyst consists of 90% platinum/5% rhodium/5% palladium, but oth er platinum-containing catalysts may also be employed with good results. Recovery gauze pack 21 contains two sheets of recovery gauze 22 sandwiched between separator screens 23. The recovery gauze packs must be of sufficient mechanical strength to withstand the force of the process stream at high reaction temperatures while simultaneously enduring the corrosive effects of the residual ammonia, oxygen and nitrogen oxide products which are formed during the process.

Example I

A recovery gauze is to be designed for a nitric acid plant operating at 900°C, 10% $NH_3$ and a loading of 13.6 tonnes (15 U.S. tons) of nitrogen in ammonia per square meter per day. The plant operates on a cycle length of 130 days, at a pressure of 690 kPa gauge (100 p.s.i.g.). To begin, a diagram (Figure 1) is prepared of the single sheet efficiency of a recovery gauze as a function of mesh size and wire diameter. Figure 6 is then consulted, and it is determined that an efficiency in excess of 40% should be obtainable. It can be seen from Figure 1 that a 19.7 $cm^{-1}$ (50 $in^{-1}$) mesh gauze with wires 0.024 cm (.0095 in) in diameter would provide a suitable instantaneous efficiency ($\eta$). Therefore, to allow for swelling, a 19.7 $cm^{-1}$ (50 $in^{-1}$) mesh gauze with wires 0.0152 cm (.006 in) diameter is prepared from 95% Pd:5% Ni. Upon use in the reactor, the gauze swells by a factor of about 2.5 to a wire diameter of about 0.038 cm (.015 in), providing an efficiency (based on the geometric average wire diameter of 0.024 cm (.0095 in)) in excess of 40%. From Figure 5, it can be estimated that such a plant can be expected to lose about .88 to .99 grams of platinum for each tonne (0.8 to 0.8 g per ton) of nitrogen converted. Thus, about 12.75 grams of platinum per day are presented to each square meter of gauze which weighs about 916 $g/m^2$. Upon operation, the first gauze sheet can be expected to remove over 40% of this for a recovery of about 5.1 grams of Pt per day per square meter of gauze, or about 665 $g/m^2$ over the catalyst cycle. The recovery gauze cycle length coincides closely with the planned cycle length of the plant, so this gauze may be used without a heavier, but less efficient gauze upstream of it. About .3 to 4 grams of palladium can be expected to be lost for each gram of Pt recovered. Three screens are used to achieve an average recovery efficiency of 78%. A successive finer and lighter screen may be used downstream to recover a portion of the residual platinum, if so desired.

EXAMPLE II

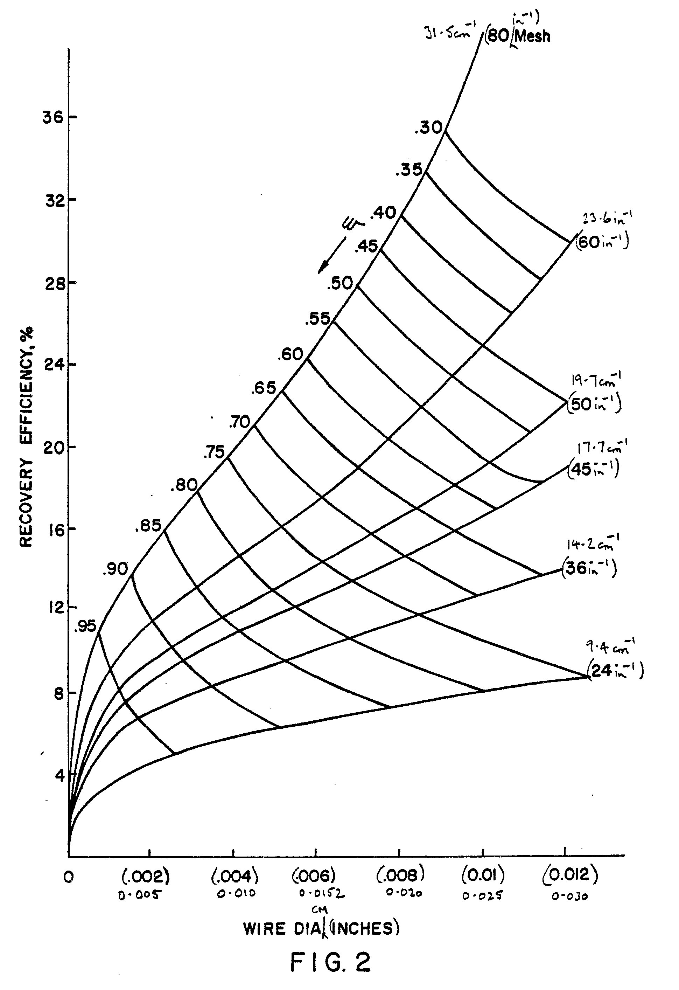

A gauze is to be designed for a plant similar to that in Example I, except that the loading is 51.7 tonnes (57 tons)/m²-day, and the cycle length is 60 days. According to Figure 5, a plant of this type can be expected to lose between about 1.54 and 1.76 grams of Pt per tonne (1.4 to 1.6 g per ton) of ammonia converted. Figure 6 shows that an efficiency of more than 17% can be obtained. It can be seen from Figure 2 that this can be obtained with a 23.6 cm⁻¹ (60 in⁻¹) mesh screen having a wire diameter of 0.0152 cm (.006 in). An 80% Pd:20% Au screen having these dimensions is selected. Upon operation, about 85 grams of Pt are presented to each square meter of the screen and about 14.5 grams are collected each day. Six screens are used to provide an overall average recovery efficiency of 67%.

## EXAMPLE III

A gauze is to be designed for a plant having a loading of 90.7 tonnes (100 tons) of nitrogen in ammonia per square meter per day, and a cycle length of 60 days. According to Figure 5, a plant of this size can be expected to lose between about 1.87 and 2.09 grams of platinum for each tonne (1.7 to 1.9 g per ton) of nitrogen converted, while an efficiency in excess of 12% can be obtained. However, if an 80% Pd:20% Au gauze having a mesh of 31.5 cm⁻¹ (80 in⁻¹) and a wire diameter of 0.0127 cm (.005 in) is used, even though an efficiency of over 15% is obtained, the recovery gauze c ycle length is shorter than the catalyst gauze cycle length. Therefore, coarser, heavier gauzes should be inserted upstream of the finer, lighter recovery gauzes after the catalyst gauze. Since a 31.5 cm⁻¹ (80 in⁻¹) mesh by 0.0127 mm (0.005 in) wire diameter gauze of 80% Pd:20% Au has a recovery gauze cycle length of 60 days with a platinum recovery of 948 g/m², the number of grams of Pt presented to each square meter of the first gauze must be decreased from about 180 grams to about 105. Thus, 4 coarse gauzes of 19.7 cm⁻¹ (50 in⁻¹) mesh by 0.0216 cm (.0085 in) wire diameter should be followed by 4 fine gauzes of 26.8 cm⁻¹ (68 in⁻¹) mesh by 0.0152 cm (.006 in) wire diameter to achieve an overall recovery of 67%.

## EXAMPLE IV

A recovery gauze system is to be designed for a nitric acid plant operating at 4.5 bar (4.5 atmospheres) pressure and a nitrogen loading of 12.0 tonnes (13.2 tons) of nitrogen in ammonia per square meter per day over a catalyst gauze cycle length of 150 days. The catalyst loss rate is known to be 0.159 g of Pt and Rh per tonne (0.144 g per ton) of nitrogen. The production rate of the plant is 300 tonnes (330 tons) of HNO₃ per day, and the effective area of the reactor is 5.8 square meters.

If two standard 31.5 cm⁻¹ (80 in⁻¹) mesh by 0.0079 cm (.0031 in) wire diameter recovery gauzes of 80% Pd:20% Au are used, the predicted recovery gauze cycle length is only about 130 days, resulting in an average recovery efficiency of the plant cycle length of approximately 46% per gauze or a total of 71% for both gauzes.

By following the procedure of Example I, it can be seen that if two 19.7 cm⁻¹ (50 in⁻¹) mesh by 0.0163 cm (.0064 in) wire diameter recovery gauzes of 95% Pd:5% Ni are used instead of the standard gauzes, the predicted recovery gauze cycle length for the first gauze slightly exceeds 150 days for an average recovery efficiency over the cycle length of 72% per gauze for a total of 92%.

Thus, each square meter of the gauzes used in the method of the present invention recover over 370 additional grams of platinum over each cycle length.

## Claims

1. A method for recovering platinum lost from a platinum-containing catalyst gauze in a nitric acid plant, wherein the catalyst gauze is replaced periodically, the period being the catalyst gauze cycle length "Tp", wherein at least one recovery gauze consisting of palladium or an alloy comprising a major proportion of palladium is placed adjacent to the catalyst gauze downstream of the catalyst gauze, characterized in that the mesh size N (expressed as the number of wires per centimetre) and wire diameter $d_w$ (in centimetres) of the recovery gauze are chosen such that the recovery gauze cycle length "T", as calculated from the formula

$$T = \frac{W}{1.25\eta\; b_m L_m}$$

is in the range of from 0.9 Tp to 1.1 Tp, wherein "W" is the weight in grams per square meter of the recovery gauze sheet, "$b_m$" is the weight in grams of platinum lost from the catalyst gauze per tonne of nitrogen (in ammonia) converted; and "$L_m$" is the weight in tonnes of nitrogen (in ammonia) passed over each square meter of the catalyst gauze per day, and "$\eta$" is the recovery efficiency of the recovery gauze sheet as calculated according to the formula

$$\eta = 1 - \exp\left[ -\frac{2C}{Sc^{2/3}} \cdot \frac{ad_w}{Re^m \; \xi^{1-m}} \right]$$

wherein "$\xi$" is the volumetric void fraction of the gauze which is less than 0.76 but greater than 0; "Sc" is the Schmidt number for the diffusion of oxidized platinum in the effluent from the catalyst gauze; "Re" is the Reynolds number based on the wire diameter and average velocity of the process stream just upstream of the recovery gauze, i.e.,

$$Re = \frac{G\; d_w}{\mu}\; .$$

where
"G" is the mass velocity ($kgm^{-1}cm^{-1}s^{-1}$) of the gaseous stream fed to the catalyst and "$\mu$" is the dynamic viscosity (Pa.s) of the effluent from the catalyst gauze; "C" is the appropriate mass transfer correlation coefficient for the gauze; "a" is the specific bulk surface area ($cm^{-1}$) of the gauze; "m" is the appropriate mass transfer correlation exponent for the gauze; and "$d_w$" is the geometric mean of the intial and final diameter (cm) of the wires in the gauze.

2. The method of claim 1 wherein the efficiency of the recovery gauze ($\eta$) exceeds $[1 - \exp(-3.22/L_m^{\cdot 7})]$.

3. The method of claim 1 wherein a plurality of recovery gauze sheets forming a recovery pack is provided, the mesh size and wire diameter of at least one gauze sheet in the pack being such that its recovery gauze cycle length is from 0.9 Tp to 1.1 Tp.

4. The method of claim 3 wherein a multiplicity of recovery gauze sheets is provided, the mesh size and wire diameter of at least two of the recovery gauze sheets being such that the average recovery efficiency over the catalyst cycle of each of at least those two sheets will exceed $[1 - \exp(-3.22/L_m^{\cdot 7})]$.

5. The method of claim 4 wherein the mesh size and wire diameter of at least one of the two recovery sheets, having an efficiency exceeding $[1 - \exp(-3.22/L_m^{\cdot 7})]$, are such that its recovery gauze cycle length is from 0.9 to 1.1 Tp.

6. The method of claim 5 wherein the mesh size and wire diameter of at least two of the recovery gauze sheets are such that their recovery gauze cycle lengths will be in the range of from 0.9 Tp to 1.1 Tp.

7. The method of claim 1 wherein a multiplicity of recovery gauze sheets is provided, at least two of the sheets having a recovery gauze cycle length of from 0.9 to 1.1 Tp, and at least one of those two sheets having an average recovery efficiency over the catalyst cycle Tp in excess of $[1 - \exp(-3.22/L_m^{\cdot 7})]$.

**Revendications**

1. Une méthode pour récupérer le platine perdu par une gaze catalytique renfermant du platine dans une installation d'acide nitrique, dans laquelle la gaze catalytique est remplacée périodiquement, la période étant la longueur du cycle de gaze catalytique "Tp" dans laquelle au moins une gaze de récupération constituée de palladium ou d'un alliage comportant une proportion prépondérante de palladium est placée adjacente à la gaze catalytique en aval de la gaze catalytique, caractérisée en ce que la dimension des mailles N (exprimée en tant que nombre de fils par centimètre) et le diamètre du fil $d_w$ - (en centimètres) de la gaze de récupération sont choisis de façon que la longueur du cycle de gaze de récupération "T", telle que calculée à partir de la formule

$$T = \frac{W}{1,25\eta \ b_m L_m}$$

se situe dans la gamme de 0,9 Tp à 1,1 Tp, dans laquelle "W" est le poids en gramme par $m^2$ de la feuille de gaze de récupération, "$b_m$" est le poids en gramme du platine perdu par la gaze de catalyseur par tonne d'azote (en ammoniac) converti ; et "$L_m$" est le poids en tonne de l'azote (en ammoniac) traversant chaque $m^2$ de gaze de catalyseur par jour, et "$\eta$" est le rendement de récupération de la feuille de gaze de récupération telle que calculé selon la formule :

$$\eta = 1 - \exp \left( - \frac{2c}{Sc^{2/3}} \cdot \frac{ad_w}{Re^m \ \zeta^{\ 1-m}} \right)$$

dans laquelle "$\zeta$" est la fraction de vide volumétrique de la gaze, qui est inférieure à 0,67 mais supérieure à 0 ; "Sc" est l'indice de Schmidt pour la diffusion du platine oxydé dans l'effluent provenant de la gaze catalytique ; "Re" est l'indice de Reynolds basé sur le diamètre du fil et la vitesse moyenne du courant de traitement juste en amont de la gaze de récupération, c'est-à-dire

$$Re = \frac{G \ d_w}{\mu}$$

où "G" est la vitesse de masse ($kgm^{-1} \ cm^{-1} \ s^{-1}$) du courant gazeux transféré sur le catalyseur et "$\mu$" est la viscosité dynamique (Pa.s) de l'effluent provenant de la gaze de catalyseur ; "C" est le coefficient de corrélation de transfert de masse approprié pour la gaze ; "a" est la surface massique spécifique ($cm^{-1}$) de la gaze ; "m" est l'exposant approprié de corrélation de transfert de masse pour la gaze ; et "$d_w$" est la moyenne géométrique du diamètre initial et final (centimètre) des fils dans la gaze.

2. La méthode de la revendication 1, dans laquelle le rendement de la gaze de récupération ($\eta$) est supérieur à $[1-\exp (-3,22/L_m^{0,7})]$.

3. La méthode de la revendication 1, dans laquelle on a prévu une pluralité de feuilles de gaze de récupération formant un tamis de récupération, la dimension des mailles et le diamètre du fil d'au moins une feuille de gaze dans le tamis étant tels que sa longueur de cycle de gaze de récupération se situe de 0,9 Tp à 1,1 Tp.

4. La méthode de la revendication 3, dans laquelle on a prévu une multiplicité de feuilles de gaze de

EP 0 244 921 B1

récupération, la dimension des mailles et le diamètre du fil d'au moins deux des feuilles de gaze de récupération étant tels que le rendement moyen de récupération pendant le cycle de catalyseur de chacune d'au moins ces deux feuilles sera supérieur à [1-exp (-3,22/$L_m^{0,7}$)].

5. La méthode de la revendication 4, dans laquelle la dimension des mailles et le diamètre du fil d'au moins l'une des deux feuilles de récupération, présentant un rendement supérieur à [1-exp (-3,22/$L_m^{0,7}$)], sont tels que sa longueur de cycle de gaze de récupération est de 0,9 à 1,1 Tp.

6. La méthode de la revendication 5, dans laquelle la dimension des mailles et le diamètre du fil d'au moins deux de ces feuilles de gaze de récupération sont tels que leur longueur de cycle de gaze de récupération sera dans la gamme de 0,9 Tp à 1,1 Tp.

7. La méthode de la revendication 1, dans laquelle on a prévu une multiplicité de feuilles de gaze de récupération, au moins deux des feuilles présentant une longueur de cycle de gaze de récupération de 0,9 à 1,1 Tp, et au moins une de ces deux feuilles présentant un rendement moyen de récupération pendant le cycle de catalyseur Tp supérieur à [1-exp (-3,22/$L_m^{0,7}$)].

**Ansprüche**

1. Verfahren zur Rückgewinnung von Platin, das aus einem Platin-enthaltenden Katalysatorgeflecht in einer Salpetersäureanlage verlustig gegangen ist, in welchem das Katalysatorgeflecht periodisch ausgetauscht wird, wobei diese Periode die Dauer des Katalysatorgeflechts-Zyklus "Tp" genannt wird, und in dem wenigstens ein Rückgewinnungsgeflecht, bestehend aus Palladium oder aus einer Legierung mit einem vorwiegenden Anteil an Palladium, benachbart zu dem Katalysatorgeflecht und stromabwärts davon angebracht wird, dadurch gekennzeichnet, daß die Maschenzahl N (ausgedrückt als die Anzahl von Drähten pro Zentimeter) und der Drahtdurchmesser $d_w$ (in Zentimetern) des Rückgewinnungsgeflechts solchermaßen ausgewählt sind, daß die Dauer des Rückgewinnungsgeflechts-Zyklus "T", berechnet nach der Formel

$$T = \frac{W}{1,25 \eta \, b_m L_m},$$

im Bereich von 0,9 Tp bis 1,1 Tp liegt, in welcher Formel "W" das Gewicht des Rückgewinnungsgeflechtes in Gramm pro Quadratmeter ist, "$b_m$" das in Gramm ausgedrückte Gewicht von Platin ist, das pro Tonne umgewandeltem Stickstoff (aus Ammoniak) aus dem Katalysatorgeflecht verlorengeht; und "$L_m$" das in Tonnen ausgedrückte Gewicht Stickstoff (aus Ammoniak), das über jeden Quadratmeter des Katalysatorgeflechts pro Tag streicht, bedeutet, und "$\eta$" die Rückgewinnungseffizienz des Rückgewinnungsgeflechtes bedeutet, die nach der Formel

$$\eta = 1 - \exp\left[ -\frac{2C}{Sc^{2/3}} \cdot \frac{a \, d_w}{Re^m \, \xi^{1-m}} \right]$$

berechnet wird, in der "$\xi$" den volumetrischen Hohlraumanteil des Geflechts, der kleiner als 0,76, aber größer als 0 ist; "Sc" die Schmidt-Zahl für die Diffusion des oxidierten Platins im vom Katalysatorgeflecht abfließenden Strom bedeuten; "Re" die Reynoldsche Zahl in bezug auf den Drahtdurchmesser und die Durchschnittsgeschwindigkeit des Prozeßstroms unmittelbar stromaufwärts von dem Rückgewinnungsgeflecht ist, d.h.

EP 0 244 921 B1

$$Re = \frac{G\ d}{\mu}w \quad ,$$

wobei "G" die Massengeschwindigkeit (kg m$^{-1}$cm$^{-1}$s$^{-1}$)des zum Katalysator geleiteten Gasstroms und "$\mu$" die dynamische Viskosität (Pa.s) des vom Katalysatorgeflecht abfließenden Stroms bedeutet; "C" den geeigneten Massenübergangs-Korrelationskoeffizienten für das Geflecht bedeutet; "a" den spezifischen Gesamt-Oberflächenbereich (cm$^{-1}$) des Geflechts darstellt; "m" den geeigneten Massenübergangs-Korrelationsexponenten für das Geflecht bedeutet; und "d$_w$" das geometrische Mittel des Anfangs- und des Enddurchmessers (cm) der Drähte im Geflecht bedeutet.

2. Verfahren nach Anspruch 1, worin die Effizienz des Rückgewinnungsgeflechts ($\eta$) größer ist als [1 - exp $(-3,22/L_m^{0,7})$].

3. Verfahren nach Anspruch 1, worin eine Vielzahl von Rückgewinnungsgeflechten vorgesehen ist, die eine Rückgewinnungspackung ausbilden, wobei die Maschenzahl und der Drahtdurchmesser bei wenigstens einem Geflecht in der Packung solcherart ausgewählt sind, daß ihre Dauer des Rückgewinnungsgeflechts-Zyklus von 0,9 Tp bis 1,1 Tp beträgt.

4. Verfahren nach Anspruch 3, worin eine Vielzahl von Rückgewinnungsgeflechten vorgesehen ist, wobei die Maschenzahl und der Drahtdurchmesser von wenigstens zwei der Rückgewinnungsgeflechte solchermaßen ausgewählt sind, daß die durchschnittliche Rückgewinnungseffizienz während des Katalysatorzyklus jedes von mindestens diesen beiden Geflechten größer ist als [1 - exp $(-3,22/L_m^{0,7})$].

5. Verfahren nach Anspruch 1, worin die Maschenzahl und der Drahtdurchmesser von wenigstens einem der beiden Rückgewinnungsgeflechte, die eine Effizienz von größer als [1 - exp $(-3,22/L_m^{0,7})$] aufweisen, solchermaßen ausgewählt sind, daß seine Dauer des Rückgewinnungsgeflechts-Zyklus von 0,9 bis 1,1 Tp beträgt.

6. Verfahren nach Anspruch 5, worin die Maschenzahl und der Drahtdurchmesser von wenigstens zwei der Rückgewinnungsgeflechte so ausgewählt sind, daß ihre Dauer des Rückgewinnungsgeflechts-Zyklus im Bereich von 0,9 Tp bis 1,1 Tp liegt.

7. Verfahren nach Anspruch 1, worin eine Vielzahl von Rückgewinnungsgeflechten vorgesehen wird, wobei wenigstens zwei der Geflechte eine Dauer des Rückgewinnungsgeflechts-Zyklus von 0,9 bis 1,1 Tp aufweisen und wenigstens eines dieser beiden Geflechte eine durchschnittliche Rückgewinnungseffizienz während des Katalysatorzyklus Tp von größer als [1 - exp $(-3,22/L_m^{0,7})$] aufweist.

FIG. 1

FIG. 2

F I G. 3

$\phi = Nd_w^2 (1+N^2d_w^2)^{1/2}$ vs. WIRE DIA. $(d)$ $(d_w)$
FOR CONSTANT MESH NO. (N).

N=80 31.5 cm⁻¹ (80 in⁻¹)

N=60 23.6 cm⁻¹ (60 in⁻¹)

N=50 19.7 cm⁻¹ (50 in⁻¹)

N=45 17.7 cm⁻¹ (45 in⁻¹)

N=36 14.2 cm⁻¹ (36 in⁻¹)

N=24 9.4 cm⁻¹ (24 in⁻¹)

FIG. 4

EP 0 244 921 B1

FIG. 5

FIG. 6

EFFICIENCIES OF THIS INVENTION

● = PRIOR ART EFFICIENCIES

RECOVERY EFFICIENCY, %

NITROGEN LOADING (SHORT TONS) OF NITROGEN PER SQUARE
METER PER DAY

PLATINUM RECOVERY
EFFICIENCY OF Pd ALLOY GETTER GAUZE

Pt RECOVERY EFFICIENCY, $\eta$ (%)

$\eta = 1 - EXP(-MTU)$

MASS TRANSFER UNIT (MTU)

△ Pd /Au ⎫ LABORATORY
▼ Pd/ Ni ⎭ DATA
○ Pd/ Au ⎫ PLANT
● Pd/ Ni ⎭ DATA

FIG. 7

EP 0 244 921 B1

FIG. 8

FIG. 9

AMMONIA

AIR

FIG. 9

EXHAUST

FIG. 10